# EUROPEAN PATENT SPECIFICATION

(11) **EP 4 459 528 B1**
(45) Date of publication and mention of the grant of the patent: **24.06.2026**
(21) Application number: 24173867.3
(22) Date of filing: 02.05.2024
(51) Int. Cl.: G06Q 10/063

(54) **METHOD AND SYSTEM FOR SHARING COLLABORATIVE DIGITAL MODELS**
VERFAHREN UND SYSTEM ZUR GEMEINSAMEN NUTZUNG KOLLABORATIVER DIGITALER MODELLE
PROCÉDÉ ET SYSTÈME DE PARTAGE DE MODÈLES NUMÉRIQUES COLLABORATIFS

(30) Priority: 05.05.2023 US 202318143772
(43) Date of publication of application: 06.11.2024
(73) Proprietor: RTX Corporation, Farmington, CT 06032 (US)
(72) Inventor: MICHAEL, Stalin Arockiadoss, Irving, 75063 (US); KLAASSEN, Andrew, Manchester, 06040 (US); McINTYRE, James, Los Angeles, 90008 (US)
(74) Representative: Dehns

(56) References cited:
- US-A1- 2019 222 560
- US-B1- 10 347 293

## Description

### TECHNICAL FIELD

This application relates to digital models, and more particularly to sharing elements of digital models in a collaborative design environment.

### BACKGROUND

For complex collaborative design projects that utilize a digital model of a system, it is known to divide design responsibilities for various subsystems representing different functions of the system among different engineering teams. Although contributing engineering teams may be collaborators for the collaborative engineering model, the teams may otherwise be competitors and wish to limit the extent to which other engineering teams are able to access sensitive information in their subsystems.

US 10 347 293 B1 discloses prior art detecting, redacting, and scoring confidential information in video.

### SUMMARY

According to an aspect of the present invention, there is provided a method of sharing a digital model as recited in claim 1.

There is also provided a system for sharing a digital model as recited in claim 11.

Features of embodiments are set forth in the dependent claims.

### BRIEF DESCRIPTION OF THE DRAWINGS

Figure 1 is a schematic view of an example collaborative design system.
Figure 2 is a schematic view of example functional elements utilized by an engineering team in the system of Figure 1.
Figure 3 schematically illustrates an example digital model and its various subsystems.
Figure 4 illustrates an example token allocation for the digital model of Figure 3.
Figure 5 illustrates another example token allocation for the digital model of Figure 3.
Figure 6 illustrates an example method of sharing a collaborative design model in the system of Figure 1.
Figure 7 illustrates an example signaling diagram that may be used to implement aspects of the method of Figure 6.

### DETAILED DESCRIPTION

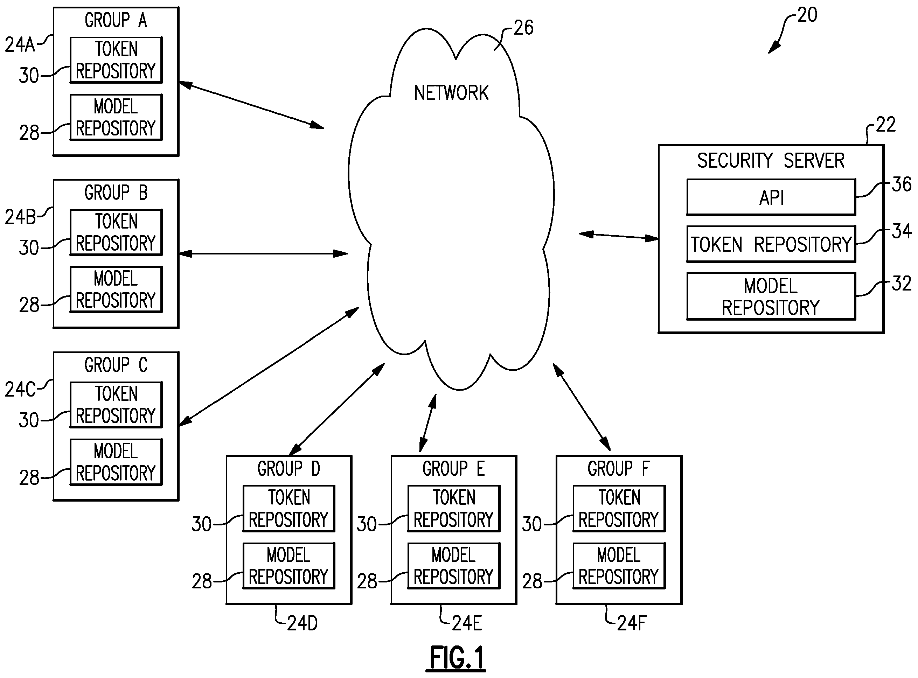

Figure 1 is a schematic view of an example collaborative design system 20 that includes a security server 22. The security server 22 provides a software platform for facilitating sharing and collaboration for a digital model of a system (e.g., a drone, aircraft, or other system with various functional components). The software platform provided at least in part by the security server 22 facilitates collaboration on a digital model between a plurality of groups 24A-F through one or more networks 26 (e.g., wide area networks, such as the Internet, or one or more local area networks).

Each group 24 has a model repository 28 that that stores model elements of the digital model and each group 24 also has a token repository 30 that may be used to store tokens for accessing redacted versions of model elements of others of the groups 24.

The security server 22 also has its own model repository 32 that stores model elements, and a token repository 34 that stores tokens and/or values derived from tokens (e.g., hashing values derived from tokens). The groups 24 may include engineering teams that design portions of the digital model and also non-designer entities, such as a customer that has commissioned design of the digital model. The security server 22 also provides an application programming interface (API) as part of its software platform, for communicating with the various groups 24A-F to selectively provide access to various model elements of one or more digital models.

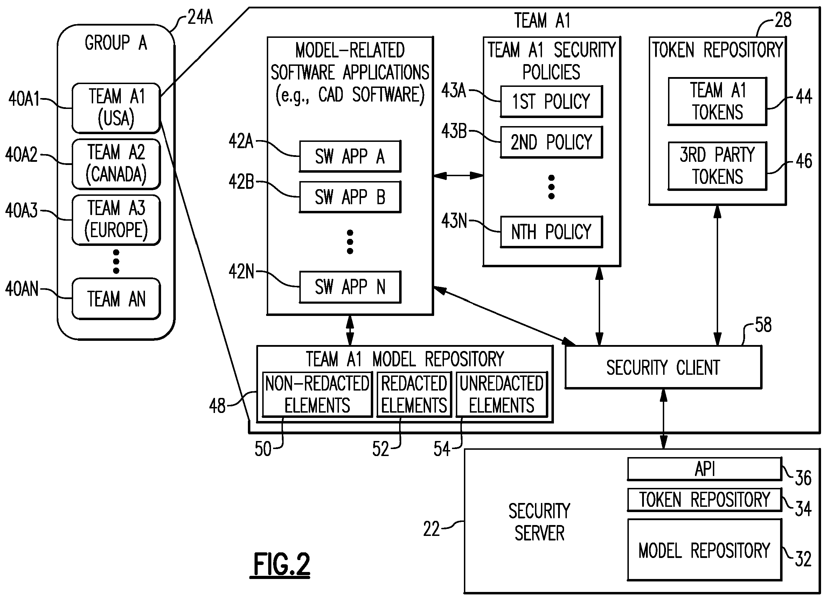

Figure 2 is a schematic view of example functional elements utilized by an engineering Team A1 (numeral 40A1) from group 24A of Figure 1. In the example of Figure 2, group 24A includes a plurality of Teams 40A-N that are geographically distributed, with team 40A being in the United States, Team B (numeral 40B) being in Canada, and team 40C being in Europe.

As shown in Figure 2, Team A utilizes a plurality of digital model-related software applications 42A-N, which may include computer aided design (CAD) software, software for preparing circuit schematics, and/or other software (e.g., for providing text-based description of model components, power requirements, dimensions, materials, etc.). As used herein, an Nth item (e.g., element 42N) generally represents a plurality of elements, and not a particular number of elements. Thus, the value of N for element 42N is not necessarily the same as the value of N for other reference numerals (e.g., 43N).

Team A1 has a plurality of security policies 43A-N that provide restrictions on what model elements can be shared outside of the team (e.g., with other teams 40 in group 24A and/or with other groups 24B-F). For example, one of the security policies 43 of Team A1 may restrict the ability of Team A1 to share portions of its digital model contributions outside of the USA (e.g., due to International Traffic in Arms Regulations).

Team A1 has a model repository 48 that includes a plurality of model elements of a digital model, including non-redacted model elements 50, redacted model elements 52, and unredacted model elements 54. As used herein, a "non-redacted" model element is one which has no associated redaction requirement and therefore no associated redacted version. A redacted model element 52 is one that has been at least partially redacted, and an unredacted model element 54 is an unredacted version of a model element that has a redacted counterpart, and that an associated redaction requirement. A redaction to a model element may include a number of things, such as blacking out or hiding text or graphical elements, scrambling data (e.g., strings or numeric values), obscuring details (e.g., by converting a complex geometric shape into a simplified version of the geometric shape, etc.) in order to withhold some detail about the model element that is redacted.

The token repository of Team A1 includes its own tokens 44, used for determining whether those outside of Team A1 can access Team A1's unredacted model elements 54, and third party tokens 46 used for determining whether Team A1 can access unredacted model elements of those outside of Team A1.

A security client 58 is a client of the security server 22 and facilitates communication between Team A1 and the security server 22. The security client 58 utilizes the API 36 of the security server 22 for various tasks, such as, for example, requesting model elements, requesting redaction tokens, receiving requests for unredacted model elements 54, etc.

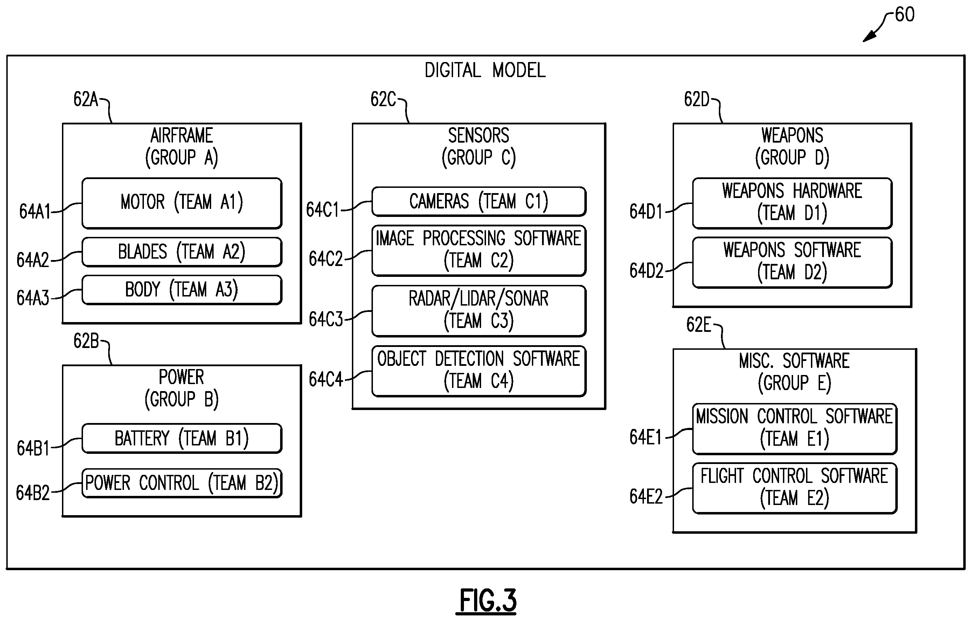

Figure 3 schematically illustrates an example digital model 60 for a system, which in the example of Figure 3 is a drone. The digital model 60 includes a plurality of subsystems 62A-E, which each represent different functions of the drone. Each subsystem 62 includes a plurality of subsidiary base models 64 that are managed by separate teams 40. Subsystem 62A (for which design responsibility is assigned to different teams of Group A) relates to an airframe subsystem of the drone. Subsystem 62B (for which design responsibility is assigned to various teams of Group B) relates to a power system of the drone. Subsystem 62C (for which design responsibility is assigned to various teams of Group C) relates to sensors of the drone. Subsystem 62D (for which design responsibility is assigned to various teams of Group D) relates to weapons of the drone. Subsystem 62E (for which design responsibility is assigned to various teams of Group E) relates to miscellaneous software of the drone.

As shown, Airframe subsystem 62A includes a motor base model 64A1 for which Team A1 is responsible, a blades base model 64A2 for turbine blades of the drone for which Team A2 is responsible, and a body base model 64A3 for a fuselage of the drone for which Team A3 is responsible.

Power subsystem 62B includes a battery base model 64B1 for which Team B1 is responsible, and a power control base model 64B2 for which Team B2 is responsible.

Sensor subsystem 62C includes a cameras base model 64C1 for which Team C1 is responsible, an image processing software base model 64C2 for which Team C2 is responsible, a radar / lidar / sonar base model 64C3 for which Team C3 is responsible, and an object detection software base model 64C4 for which Team C4 is responsible.

Weapons subsystem 62D includes a weapons hardware base model 64D1 for which Team D1 is responsible, and a weapons software base model 64D2 for which Team D2 is responsible.

Miscellaneous software subsystem 62E includes a mission control software base model 64E1 for which Team E1 is responsible, and a flight control software base model 64E2 for which Team E2 is responsible.

Although Figure 3 is only a non-limiting example, it clearly shows how the design model 60 can have various subsystems 62, each having constituent base models 64 with responsibility distributed across many groups 24 and teams 40.

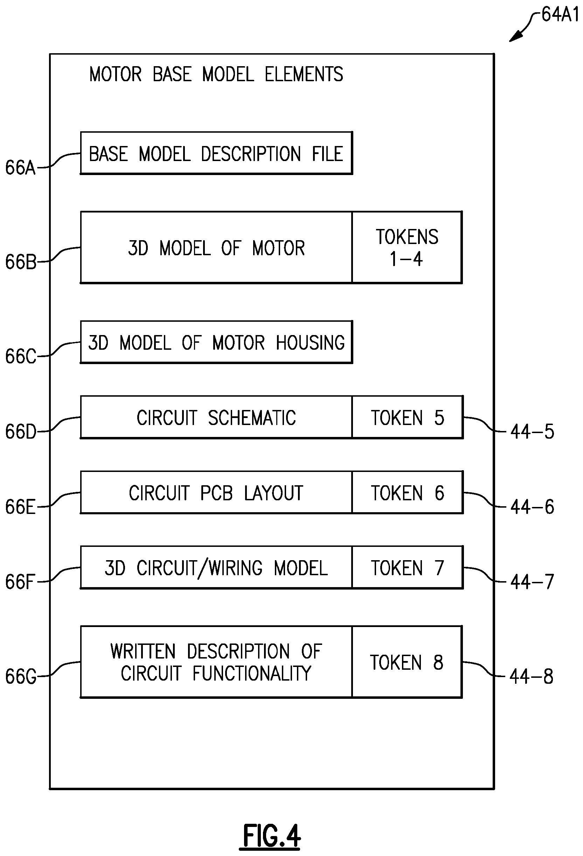

Figure 4 illustrates a plurality of example model elements 66A-G of the base model 64A1 and an allocation of redaction tokens 44-1 to 44-8 to various ones of the model elements 66A-G. As shown in Figure 4, the motor base model 64A1 includes the following model elements: base model description file 66A, 3D model of motor 66B, 3D model of motor housing 66C, circuit schematic 66D, circuit PCB layout 66E, 3D circuit / wiring model 66F, and written description of circuit functionality 66G.

Each of the model elements 66B, 66D, 66E, 66F, and 66G are at least partially redacted and have corresponding tokens 44-1 through 44-8 assigned to those redactions. As discussed above, a redaction to a model element may include a number of things, such as blacking out or hiding text or graphical elements, scrambling data (e.g., strings or numeric values), obscuring details (e.g., by converting a complex geometric shape into a simplified version of the geometric shape, etc.) in order to withhold some detail about the model element that is redacted.

Redaction token 44-5 is associated with a redaction to circuit schematic 66D, redaction token 44-6 is associated with a redaction to circuit PCB layout 66E, redaction token 44-7 is associated with a redaction to 3D circuit / wiring model 66F

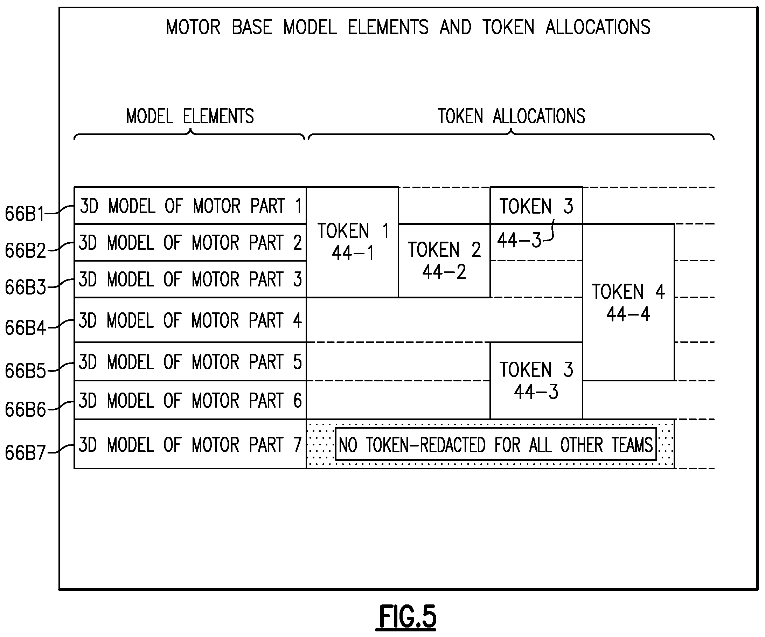

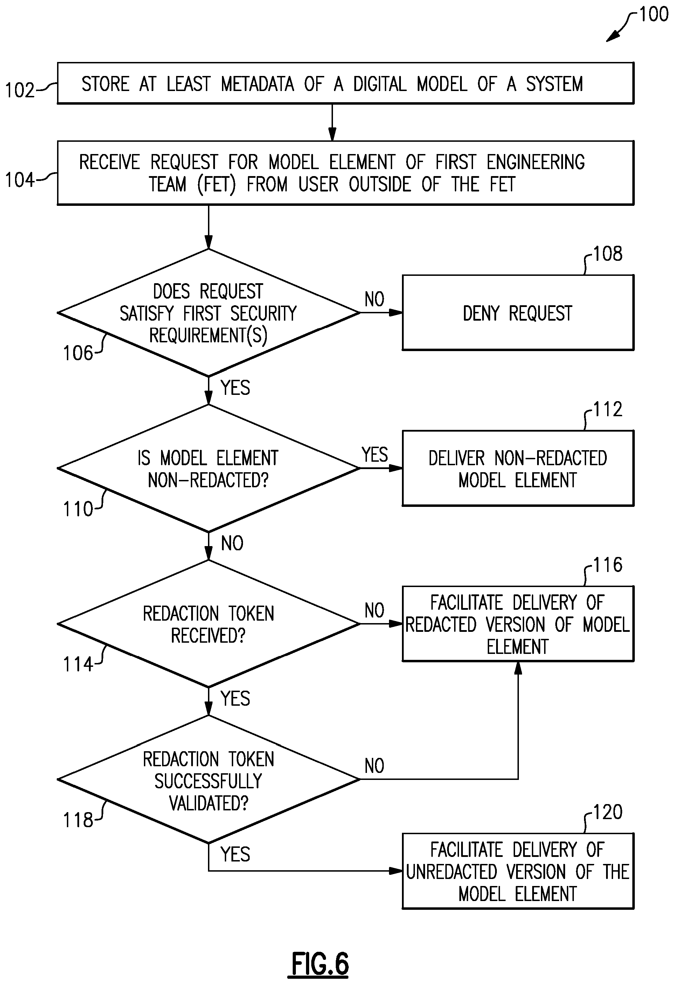

Figure 5 illustrates a token allocation for redactions to the 3D motor model 66B, which as shown in Figure 6 includes a plurality of constituent model elements 66B1-66B7 for different components of the 3D model of the motor 66B. Token 1 (numeral 44-1) is used for redactions to model elements 66B1, 66B2, and 66B3. Token 2 (numeral 44-2) is used for redactions to model elements 66B2 and 66B3. Token 3 (numeral 44-3) is used for redactions to model elements 66B1, 66B5, and 66B6. Token 4 (numeral 44-4) is used for redactions to model elements 66B2 through 66B5. Element 66B7 is redacted, but has no associated redaction token because it is not shareable with anyone outside of Team A1. Different ones of the tokens 44 shown in Figure 5 can be provided to different groups 24 and/or teams 40 in the system 20 to provide for granular control over what model elements 66 get shared in redacted form, and which groups 24 and/or teams 40 in the system 20 are able to access unredacted versions of the redacted model elements 66. Where a single model element (e.g., model element 66B2) has multiple associated redaction tokens, those tokens may be associated with the same or with different redactions to the model element 66B2.

Figure 6 illustrates an example method 100 of sharing a digital model in the system 20 of Figure 1, which is performed in part or in whole by the security server 22. For the discussion below, assume the "first engineering team" ("FET") is Team A1 (numeral 64A1) (although any of the various engineering teams could be used instead).

At least metadata of a digital model 60 of a system is stored in memory (step 102). The digital model 60 includes a plurality of discrete subsystems 62 representing different functions of the system, each subsystem 62 including a plurality of discrete model elements 66, and design responsibility for different ones of the model elements 66 is assigned to different ones of a plurality of engineering teams 40.

A request for a model element of a first engineering team, which in this example discussion is Team A1, is received from a user outside of Team A1 (step 104). This may be a from another team of Group A (e.g., Team A2 or Team A3), or may be a user from another group 24, for example.

A determination is made of whether the request satisfies one or more first security requirements associated with Team A1 (step 106). In at least one example, the one or more first security requirements of step 106 are baseline security requirements that must be satisfied to have access to any model element 66 of the collaborative digital model 60, which could serve to prevent unauthorized users from accessing even redacted versions of model elements 66. If the one or more first security requirements are not satisfied (a "no" to step 106), the request is denied (step 108). Otherwise, if the one or more first security requirements are satisfied (a "yes" to step 106), a determination is made of whether the requested model element is non-redacted (step 110).

Referring to Figure 4, the model element 66C is non-redacted because it has no associated redaction requirement, and is authorized for sharing with other teams 40 and groups 24. For such a model element, determination would be a "yes" to step 110, and the method 100 would proceed to delivering the non-redacted model element (step 112).

Otherwise, if the model element 66 is redacted (a "yes" to step 110) (like the other model elements 66A-B and 66D-G), then a determination is made of whether a redaction token has been received that corresponds to the at least one redaction (step 114). If no redaction token is received (a "no" to step 114), then delivery of a redacted version of the requested model element 66 is facilitated (step 116). Step 116 may include delivering the redacted model element 66 from the model repository 32 of the security server 22, for example.

If a redaction token is received that corresponds to the at least one redaction in conjunction with the request (a "yes" to step 114), a token validation algorithm is utilized to determine if the token can be successfully validated (step 118). The token validation algorithm involves comparing the redaction token received with the request of step 104, or a value derived from the received redaction token (e.g., a hashing value derived from the received redaction token), with a master redaction token corresponding to the at least one redaction (e.g., as described in Figures 4-5), or a value derived from the master redaction token (e.g., a hashing value derived from the master redaction token), and determining whether the received redaction token is validated based on the comparison.

If the redaction token is not successfully validated (a "no" to step 118), then the method proceeds to step 116, for delivery of the redacted version of the model element. Otherwise, if the redaction token validation is successful (a "yes" to step 118), then delivery of the unredacted version of the model element is facilitated (step 120). Step 120 may include the security server 22 delivering the unredacted version of the model element 66 from its own model repository 32, or may involve the security server 22 transmitting the request and potentially also the validated redaction token to Team A1 for further processing (e.g., for Team A1 to verify if the request satisfies one or more second security requirements).

As discussed above, step 102 includes storing "at least metadata" of the digital model 60 of a system is stored in memory. Some example metadata of the digital model 60 may include names of the subsystems 62, the model elements 64, and/or details of the contents of the model elements 64 (e.g., file names, file sizes, file content, etc. of the model elements 64). Step 102 may include the security server 22 storing model elements in its model repository 32 (e.g., redacted and non-redacted model elements), and relying on each group 24 to store their own unredacted model elements, for example. Alternatively, the security server 22 may omit its own model repository 32 and just obtain model elements on demand from the groups 24 as they are appropriately requested. In this case, the security server 22 would store metadata about the model elements, but not necessarily store the actual model elements themselves. The model repository 32, although shown as being part of the security server 22, may include cloud storage that is external to the security server 22.

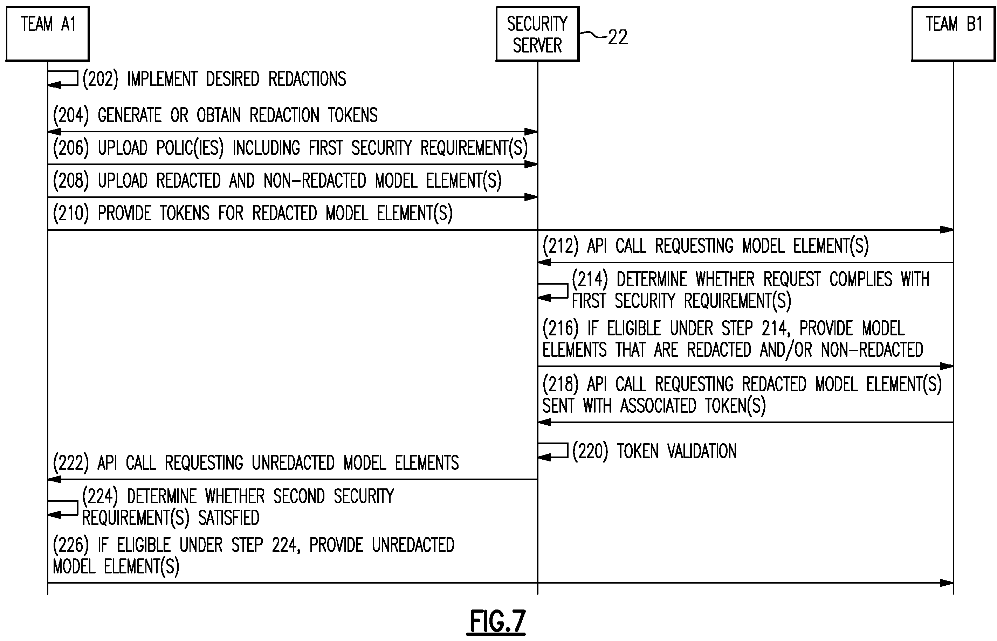

Figure 7 illustrates an example signaling diagram that may be used to implement aspects of the method 100 of Figure 6, and is illustrated with respect to Team A1 of Group A and Team B1 of Group B. In the example of Figure 7, assume that Team A1 has a set of one or more first security requirements, and that compliance of a request with the one or more first security requirements is a prerequisite for a user outside of Team A1 to obtain access to any model element 66 of Team A1 (whether a non-redacted model element, redacted model element, or unredacted model element), and is also a prerequisite for the security server 22 to deliver any model element of Team A1 to the user outside of Team A1.

In the example of Figure 7, further assume that Team A1 also has a set of one or more second security requirements that differ from the one or more first security requirements, and that compliance of a request with the one or more second security requirements is a prerequisite for a user outside of Team A1 to obtain access to an unredacted model element 66 of Team A1, and is also a prerequisite for the security server 22 to deliver any redacted model element 66 of Team A1 to the user outside of Team A1.

Referring still to Figure 7, Team A1 (e.g., a team member or a representative of Team A1) implements one or more desired redactions (e.g., the various redactions described in Figures 4-5) (step 202). Redaction tokens for the one or more redactions are generated or obtained from the security server 22 (step 204). This may include Team A1 generating or obtaining its own redaction tokens and providing them to the security server 22, or the security server 22 generating the tokens on behalf of Team A1 and providing the tokens to Team A1. Thus, in at least one example the security server 22 may receive (e.g., from an administrative user associated with the first engineering team), an indication plurality of discrete digital redactions that correspond to different model elements 66 of a particular subsystem, and associate different redaction tokens with each of the discrete redactions. As used herein, the security server 22 receiving an indication of a redaction may mean the security server 22 receiving a model element that includes a redaction, for example.

Team A1 uploads one or more security policies that include the one or more first security requirements discussed above to the security server 22 (step 206), and uploads its redacted model elements 66 and, if there are any, its non-redacted model elements 66, but not its unredacted model elements 66 (step 208). Team B1 obtains a token for a redaction indicated in step 202 (step 210). This may include Team A1 sending the token to Team B1 on its own or instructing the security server 22 to send the token to Team B1, for example. Team A1's security client 58 may be used for steps 202, 204, 206, 208, and/or 210, for example.

Team B1 (e.g., a team member or representative of Team B1) uses its security client 58 to submit an API call to the API 36 requesting a particular model element (step 212).

The security server 22 determines if the request satisfies the one or more first security requirements of the one or more security policies uploaded in step 206 (step 214, which is an example implementation of step 106 of Figure 6). If the request satisfies the one or more first security requirements, a model element is transmitted to Team B1 (step 216). If the model element 66 is non-redacted, the non-redacted model element is sent (see step 110 of Figure 6). Otherwise, if the model element is redacted, the redacted version of the model element is sent (see step 114 of Figure 6). In at least one example, the security server 22 does not require a redaction token for sending either a non-redacted model element or a redacted model element, but rather only requires a redaction token for sending an unredacted model element.

Team B1 uses its security client 58 to make an API call to API 36 of the security server 22 along with its associated redaction token requesting an unredacted version of the redacted model element sent in step 216 (step 218). The security server 22 utilizes a token validation algorithm to determine whether the received token is successfully validated (step 220, see also step 118 of Figure 6).

If the redaction token is successfully validated, the security server 22 sends a request to the security client 58 of Team A1 for the unredacted model element (step 222). Team A1 (e.g., its security client 58) determines whether the request received in step 218 satisfies the one or more second security requirements of Team A1 discussed above (step 224), and if satisfied, Team A1 provides the unredacted model element(s) to Team B1, optionally through the security server 22 (step 226).

The security policies (referred to as "security requirements" above) may include a wide variety of policies, such of which may be characterized as "static" because they can be applied by the security server 22 on its own, and others which may be characterized as "dynamic" since they are more suitable to implementation by the various groups 24 participating in the system.

For example, the security requirements may be used to block any access to an entire base model 64 or one or more its model elements 66, or prevent only unredacted access to the base model 64 or one or more of its model elements 66.

Here are some example security requirements that may be used in the system 10:
- Geography-based requirement limiting access based on geography (e.g., even between teams 40 of a single group 24), such as for imposing export controls (e.g., to comply with International Traffic in Arms Regulations "ITAR" regulations).
- Role-based requirements that impose limitations based on role (e.g., permit manager of a given team 40 more access than a non-manager of the team 40).
- Program-based requirements that impose redaction limitations based on a state of the collaborative model within a design life cycle.
- Internet Protocol (IP) address requirements that either blacklist certain IP addresses, or blacklist all IP addresses not part of a whitelist from receiving unredacted model elements, or any model elements at all.
- Intellectual property requirements that prohibit sharing an unredacted version of a model element until some IP protection step has been taken (e.g., trade secret agreement entered, non-disclosure agreement entered, patent application filed, etc.).
- Device requirements that prohibit certain types of access (e.g., access to redacted or unredacted model elements) based on a device identifier.
- License requirements that only facilitate a predefined number of uses or accesses to a particular model element (as excessive access and/or use may be indicative of abnormal activity).

Thus, in determining whether a particular request satisfies the criteria above, the security server 22 may also analyze related information about the requestor (e.g., their IP address, their device identifier, their role in the system 20, etc.)

These example security requirements, or others, may be used as part of either the one or more first security requirements applied by the security server 22 (e.g., in step 106 / 214) and/or the one or more second security requirements applied by the engineering team sharing its model. For some requirements, where the security server 22 is less likely to have insight into whether the requirement is fulfilled (e.g., whether a patent application has been filed yet), it may be more advantageous to include such requirements in the list of one or more second security requirements.

In at least one example, redactions are made according to a hierarchy, and corresponding redaction tokens also have a hierarchical ranking (e.g., at least a level one redaction token required to access certain model elements with a level one redaction, at least a level redaction token required to access certain model elements with a level two redaction, etc.).

In at least one example, a single redaction token may be associated with multiple redactions at different levels. Using the example of Figure 5, in one example redaction token 1 (numeral 44-1) is a level one redaction token for accessing an unredacted version of a level one redaction, and redaction token 2 (reference numeral 44-2) is a level two redaction token for accessing the an unredacted version of the level one redaction and also of a level two redaction.

The features described above provide for engineering teams participating in a collaborative design project with a collaborative engineering model to have granular control over who can access their model elements.

Although example embodiments have been disclosed, a worker of ordinary skill in this art would recognize that certain modifications would come within the scope of the appended claims.

## Claims

1. A method of sharing a digital model, comprising:
storing in memory at least metadata of a digital model (60) of a system, wherein the digital model (60) includes a plurality of discrete subsystems (62) representing different functions of the system, each subsystem (62) including a plurality of discrete model elements (66), and design responsibility for different ones of the model elements (66) is assigned to different ones of a plurality of engineering teams;
receiving, from a user that is not part of a first engineering team (A1) of the plurality of engineering teams, a request to access a particular model element (66) of a particular subsystem (62), wherein design responsibility for the particular model element (66) is assigned to the first engineering team (A1), and the particular model element (66) includes at least one redaction implemented according to a security policy of the first engineering team (A1);
performing at least one of:
based on the request lacking a redaction token corresponding to the at least one redaction, facilitating delivery of a redacted version of the particular model element (66) to the user that includes the at least one redaction; and
based on the request including the redaction token, facilitating delivery of an unredacted version of the particular model element (66) to the user; and
utilizing a token validation algorithm to determine whether the redaction token is valid or invalid,
wherein
said facilitating delivery of the unredacted version of the particular model element (66) is only performed if the token validation algorithm indicates that the redaction token is valid, wherein said utilizing the token validation algorithm comprises:
comparing the received redaction token, or a value derived from the received redaction token, with a master redaction token corresponding to the at least one redaction, or a value derived from the master redaction token; and
determining whether the received redaction token is validated based on the comparison.

2. The method of claim 1, comprising:
receiving, from an administrative user associated with the first engineering team (A1), an indication of a plurality of discrete digital redactions that correspond to different model elements (66) of the particular subsystem (62); and
associating different redaction tokens with each of the discrete redactions.

3. The method of claim 1 or 2, comprising:
receiving a request from the user to access an additional model element (66) of the particular subsystem (62) that is non-redacted; and
facilitating delivery of the additional model element (66) without requiring receipt of a redaction token.

4. The method of any preceding claim, wherein:
each engineering team has one or more security requirements that must be fulfilled to access its model elements (66); and
said facilitating steps are further based on the request from the user fulfilling the one or more security requirements of the first engineering team (A1).

5. The method of claim 4, wherein:
the one or more security requirements of the first engineering team (A1) include one or more first security requirements and one or more second security requirements that differ from the one or more first security requirements;
compliance of the request with the one or more first security requirements of the first engineering team (A1) is a prerequisite for delivery of the redacted version and the unredacted version of the particular model element (66); and
compliance of the request with the one or more second security requirements of the first engineering team (A1) is a prerequisite for delivery of the unredacted version, but not the redacted version, of the particular model element (66).

6. The method of claim 5, including:
a security server (22) performs said storing step, receiving step, and at least one of the facilitating delivery steps;
the method includes the security server (22) validating the redaction token, and based on a successful validation, sending an indication of the request to a security client of the first engineering team (A1) to facilitate determination, by the security client, of whether the request fulfills the one or more second security requirements.

7. The method of any of claims 4 to 6, wherein the one or more security requirements include at least one of:
a requirement that an IP address of a computing device that the request is received from is not a blacklisted IP address;
a requirement that the computing device is not located in an unauthorized geographic territory; and
a requirement that a static device identifier of the computing device is not blacklisted.

8. The method of any of claims 4 to 7, wherein the one or more security requirements include at least one of:
a requirement that the user is not part of a user group that the first engineering team (A1) has prohibited from accessing unredacted model elements (66) of the first engineering team (A1); and
a requirement that the redaction token has not been used more than a predefined number of permitted times.

9. The method of any preceding claim, comprising:
rejecting a request for an unredacted version of the particular model element (66) based on the particular model element (66) being flagged for inclusion in a patent application that has not yet been filed.

10. The method of any preceding claim, wherein:
a security server (22) performs said storing step, receiving step, and at least one of the facilitating delivery steps;
said facilitating delivery of the redacted version of the particular model element (66) comprises the security server (22) obtaining the redacted version from its own storage, and sending the redacted version to the user; and
said facilitating delivery of the unredacted version of the particular model element (66) to the user comprises the security server (22) obtaining the unredacted version from the first engineering team (A1) in response to the request, and sending the unredacted version to the user after it is received from the first engineering team (A1).

11. A system for sharing a digital model, comprising:
a security server (22) comprising processing circuitry operatively connected to memory and configured to:
storing in the memory at least metadata of a digital model (60) of a system, wherein the digital model (60) includes a plurality of discrete subsystems (62) representing different functions of the system, each subsystem (62) including a plurality of discrete model elements (66), and design responsibility for different ones of the model elements (66) is assigned to different ones of a plurality of engineering teams;
receive, from a user that is not part of a first engineering team (A1) of the plurality of the engineering teams, a request to access a particular model element (66) of a particular subsystem (62) managed by the first of the engineering teams, wherein the particular model element (66) includes at least one digital redaction implemented according to a security policy of the first of the engineering teams;
perform at least one of:
based on the request lacking a redaction token corresponding to the at least one redaction, facilitate delivery of a redacted version of the particular model element (66) to the user that includes the at least one redaction; and
based on the request including the redaction token, facilitate delivery of an unredacted version of the particular model element (66) to the user; and
utilize a token validation algorithm to determine whether the redaction token is valid or invalid and only facilitate delivery of the unredacted version of the particular model element (66) if the token validation algorithm indicates that the redaction token is valid.

12. The system of claim 11, wherein the processing circuitry is configured to:
receive, from an administrative user associated with the first engineering team (A1), an indication of a plurality of discrete redactions that correspond to different model elements (66) of the particular subsystem (62); and
associate different redaction tokens with each of the discrete redactions.

13. The system of claim 11 or 12, wherein the processing circuitry is configured to:
receive a request from the user to access an additional model element (66) of the particular subsystem (62) that is non-redacted; and
facilitate delivery of the additional model element (66) without requiring receipt of a redaction token.

14. The system of any of claims 11 to 13, wherein:
the first engineering team (A1) has one or more first security requirements and one or more second security requirements that differ from the one or more first security requirements;
compliance of the request with one or more first security requirements of the first engineering team (A1) is a prerequisite for the security server (22) to facilitate delivery of the redacted version and the unredacted version of the particular model element (66); and
compliance of the request with one or more second security requirements of the first engineering team (A1) is a prerequisite for delivery of the unredacted version, but not the redacted version, of the particular model element (66), optionally wherein the first security requirements or second security requirements include at least one of:
a requirement that an IP address of a computing device that the request is received from is not a blacklisted IP address;
a requirement that the computing device is not located in an unauthorized geographic territory;
a requirement that a static device identifier of the computing device is not blacklisted;
a requirement that the user is not part of a user group that the first engineering team (A1) has prohibited from accessing unredacted model elements (66) of the first engineering team (A1);
a requirement that the redaction token has not been used more than a predefined number of permitted times; and
a requirement that the particular model element (66) is not flagged for inclusion in a patent application that has not yet been filed.

15. The system of claim 14, wherein:
each of the engineering teams has a respective security client;
the processing circuitry is configured determine whether the request complies with the one or more first security requirements independently of the security client of the first engineering team (A1); and
to facilitate delivery of the unredacted version of the particular model element (66), the processing circuitry is configured to send an indication of the request to the security client of the first engineering team (A1) for determination, by the security client of the first engineering team (A1), of whether the request fulfills the one or more second security requirements, optionally wherein, for each engineering team, the security client is configured to act as a broker by:
communicating with the server to send and receive requests for model elements (66);
communicating with the server to sending and receiving model elements (66); and
storing third party tokens for accessing redacted versions of model elements (66) of others of the engineering teams.

## Patentansprüche

1. Verfahren zum gemeinsamen Nutzen eines digitalen Modells, umfassend:
Speichern von mindestens Metadaten eines digitalen Modells (60) eines Systems in einem Speicher, wobei das digitale Modell (60) eine Vielzahl von diskreten Subsystemen (62) einschließt, die verschiedene Funktionen des Systems darstellen, wobei jedes Subsystem (62) eine Vielzahl von diskreten Modellelementen (66) einschließt und eine Ausgestaltungsverantwortung für verschiedene der Modellelemente (66) verschiedenen einer Vielzahl von Technikteams zugewiesen ist;
Empfangen einer Anfrage, um auf ein spezifisches Modellelement (66) eines spezifischen Subsystems (62) zuzugreifen, von einem Benutzer, der nicht Teil eines ersten Technikteams (A1) der Vielzahl von Technikteams ist, wobei die Ausgestaltungsverantwortung für das spezifische Modellelement (66) dem ersten Technikteam (A1) zugewiesen ist und das spezifische Modellelement (66) mindestens eine Redigierung einschließt, die gemäß einer Sicherheitsrichtlinie des ersten Technikteams (A1) implementiert ist;
Durchführen mindestens eines von Folgendem:
Erleichtern einer Lieferung einer redigierten Fassung des spezifischen Modellelements (66) an den Benutzer, die die mindestens eine Redigierung einschließt, basierend auf der Anfrage, der ein der mindestens einen Redigierung entsprechendes Redigierungstoken fehlt; und
Erleichtern einer Lieferung einer unredigierten Fassung des spezifischen Modellelements (66) an den Benutzer basierend auf der Anfrage einschließlich des Redigierungstokens; und
Verwenden eines Tokenvalidierungsalgorithmus, um zu bestimmen, ob das Redigierungstoken gültig oder ungültig ist,
wobei
das Erleichtern der Lieferung der unredigierten Fassung des spezifischen Modellelements (66) nur durchgeführt wird, falls der Tokenvalidierungsalgorithmus anzeigt, dass das Redigierungstoken gültig ist, wobei das Verwenden des Tokenvalidierungsalgorithmus Folgendes umfasst:
Vergleichen des empfangenen Redigierungstokens oder eines von dem empfangenen Redigierungstoken abgeleiteten Wertes mit einem Hauptredigierungstoken, das der mindestens einen Redigierung entspricht, oder einem von dem Hauptredigierungstoken abgeleiteten Wert; und
Bestimmen, ob das empfangene Redigierungstoken basierend auf dem Vergleich validiert ist.

2. Verfahren nach Anspruch 1, umfassend:
Empfangen einer Anzeige einer Vielzahl von diskreten digitalen Redigierungen, die verschiedenen Modellelementen (66) des spezifischen Subsystems (62) entsprechen, von einem administrativen Benutzer, der mit dem ersten Technikteam (A1) verknüpft ist; und
Verknüpfen verschiedener Redigierungstokens mit jeder der diskreten Redigierungen.

3. Verfahren nach Anspruch 1 oder 2, umfassend:
Empfangen einer Anfrage von dem Benutzer, um auf ein zusätzliches Modellelement (66) des spezifischen Subsystems (62) zuzugreifen, das nicht redigiert ist; und
Erleichtern der Lieferung des zusätzlichen Modellelements (66), ohne dass ein Empfang eines Redigierungstokens erforderlich ist.

4. Verfahren nach einem der vorhergehenden Ansprüche, wobei:
jedes Technikteam eine oder mehrere Sicherheitsanforderungen aufweist, die erfüllt sein müssen, um auf seine Modellelemente (66) zuzugreifen; und
die Erleichterungsschritte ferner auf der Anfrage von dem Benutzer basieren, der die eine oder die mehreren Sicherheitsanforderungen des ersten Technikteams (A1) erfüllt.

5. Verfahren nach Anspruch 4, wobei:
die eine oder die mehreren Sicherheitsanforderungen des ersten Technikteams (A1) eine oder mehrere erste Sicherheitsanforderungen und eine oder mehrere zweite Sicherheitsanforderungen, die sich von der einen oder den mehreren ersten Sicherheitsanforderungen unterscheiden, einschließen;
eine Übereinstimmung der Anfrage mit der einen oder den mehreren ersten Sicherheitsanforderungen des ersten Technikteams (A1) eine Voraussetzung für die Lieferung der redigierten Fassung und der unredigierten Fassung des spezifischen Modellelements (66) ist; und
eine Übereinstimmung der Anfrage mit der einen oder den mehreren zweiten Sicherheitsanforderungen des ersten Technikteams (A1) eine Voraussetzung für die Lieferung der unredigierten Fassung, aber nicht der redigierten Fassung, des spezifischen Modellelements (66) ist.

6. Verfahren nach Anspruch 5, einschließlich:
der Tatsache, dass ein Sicherheitsserver (22) den Speicherschritt, Empfangsschritt und mindestens einen der Lieferungserleichterungsschritte durchführt;
der Tatsache, dass das Verfahren den Sicherheitsserver (22) einschließt, der das Redigierungstoken validiert und basierend auf einer erfolgreichen Validierung eine Anzeige der Anfrage an einen Sicherheitsclient des ersten Technikteams (A1) sendet, um die Bestimmung durch den Sicherheitsclient zu erleichtern, ob die Anfrage die eine oder die mehreren zweiten Sicherheitsanforderungen erfüllt.

7. Verfahren nach einem der Ansprüche 4 bis 6, wobei die eine oder die mehreren Sicherheitsanforderungen mindestens eines von Folgendem einschließen:
eine Anforderung, dass eine IP-Adresse einer Computervorrichtung, von der die Anfrage empfangen wird, keine schwarzgelistete IP-Adresse ist;
eine Anforderung, dass sich die Computervorrichtung nicht in einem unautorisierten geografischen Gebiet befindet; und
eine Anforderung, dass ein statischer Vorrichtungsidentifikator der Computervorrichtung nicht schwarzgelistet ist.

8. Verfahren nach einem der Ansprüche 4 bis 7, wobei die eine oder die mehreren Sicherheitsanforderungen mindestens eines von Folgendem einschließen:
eine Anforderung, dass der Benutzer nicht Teil einer Benutzergruppe ist, der das erste Technikteam (A1) das Zugreifen auf unredigierte Modellelemente (66) des ersten Technikteams (A1) untersagt hat; und
eine Anforderung, dass das Redigierungstoken nicht mehr als eine vordefinierte Anzahl zulässiger Male verwendet wurde.

9. Verfahren nach einem der vorhergehenden Ansprüche, umfassend:
Ablehnen einer Anfrage für eine unredigierte Fassung des spezifischen Modellelements (66) basierend auf dem spezifischen Modellelement (66), das zur Einbeziehung in eine Patentanmeldung, die noch nicht angemeldet wurde, gekennzeichnet ist.

10. Verfahren nach einem der vorhergehenden Ansprüche, wobei:
der Tatsache, dass ein Sicherheitsserver (22) den Speicherschritt, Empfangsschritt und mindestens einen der Lieferungserleichterungsschritte durchführt;
das Erleichtern der Lieferung der redigierten Fassung des spezifischen Modellelements (66) umfasst, dass der Sicherheitsserver (22) die redigierte Fassung aus seinem eigenen Speicher erhält und die redigierte Fassung an den Benutzer sendet; und
das Erleichtern der Lieferung der unredigierten Fassung des spezifischen Modellelements (66) an den Benutzer umfasst, dass der Sicherheitsserver (22) die unredigierte Fassung von dem ersten Technikteam (A1) als Reaktion auf die Anfrage erhält und die unredigierte Fassung an den Benutzer sendet, nachdem sie von dem ersten Technikteam (A1) empfangen wird.

11. System zum gemeinsamen Nutzen eines digitalen Modells, umfassend:
einen Sicherheitsserver (22), umfassend eine Verarbeitungsschaltung, die operativ mit einem Speicher verbunden und zu Folgendem konfiguriert ist:
Speichern von mindestens Metadaten eines digitalen Modells (60) eines Systems in dem Speicher, wobei das digitale Modell (60) eine Vielzahl von diskreten Subsystemen (62) einschließt, die verschiedene Funktionen des Systems darstellen, wobei jedes Subsystem (62) eine Vielzahl von diskreten Modellelementen (66) einschließt und eine Ausgestaltungsverantwortung für verschiedene der Modellelemente (66) verschiedenen einer Vielzahl von Technikteams zugewiesen ist;
Empfangen einer Anfrage, um auf ein spezifisches Modellelement (66) eines spezifischen Subsystems (62) zuzugreifen, das durch das erste der Technikteams verwaltet wird, von einem Benutzer, der nicht Teil eines ersten Technikteams (A1) der Vielzahl der Technikteams ist, wobei das spezifische Modellelement (66) mindestens eine digitale Redigierung einschließt, die gemäß einer Sicherheitsrichtlinie des ersten der Technikteams implementiert ist;
Durchführen mindestens eines von Folgendem:
Erleichtern einer Lieferung einer redigierten Fassung des spezifischen Modellelements (66) an den Benutzer, die die mindestens eine Redigierung einschließt, basierend auf der Anfrage, der ein der mindestens einen Redigierung entsprechendes Redigierungstoken fehlt; und
Erleichtern einer Lieferung einer unredigierten Fassung des spezifischen Modellelements (66) an den Benutzer basierend auf der Anfrage einschließlich des Redigierungstokens; und
Verwenden eines Tokenvalidierungsalgorithmus, um zu bestimmen, ob das Redigierungstoken gültig oder ungültig ist, und Erleichtern der Lieferung der unredigierten Fassung des spezifischen Modellelements (66) nur, falls der Tokenvalidierungsalgorithmus anzeigt, dass das Redigierungstoken gültig ist.

12. System nach Anspruch 11, wobei die Verarbeitungsschaltung zu Folgendem konfiguriert ist:
Empfangen einer Anzeige einer Vielzahl von diskreten Redigierungen, die verschiedenen Modellelementen (66) des spezifischen Subsystems (62) entsprechen, von einem administrativen Benutzer, der mit dem ersten Technikteam (A1) verknüpft ist; und
Verknüpfen verschiedener Redigierungstokens mit jeder der diskreten Redigierungen.

13. System nach Anspruch 11 oder 12, wobei die Verarbeitungsschaltung zu Folgendem konfiguriert ist:
Empfangen einer Anfrage von dem Benutzer, um auf ein zusätzliches Modellelement (66) des spezifischen Subsystems (62) zuzugreifen, das nicht redigiert ist; und
Erleichtern der Lieferung des zusätzlichen Modellelements (66), ohne dass ein Empfang eines Redigierungstokens erforderlich ist.

14. System nach einem der Ansprüche 11 bis 13, wobei:
das erste Technikteam (A1) eine oder mehrere erste Sicherheitsanforderungen und eine oder mehrere zweite Sicherheitsanforderungen, die sich von der einen oder den mehreren ersten Sicherheitsanforderungen unterscheiden, aufweist;
eine Übereinstimmung der Anfrage mit einer oder mehreren ersten Sicherheitsanforderungen des ersten Technikteams (A1) eine Voraussetzung für den Sicherheitsserver (22) ist, um die Lieferung der redigierten Fassung und der unredigierten Fassung des spezifischen Modellelements (66) zu erleichtern; und
eine Übereinstimmung der Anfrage mit einer oder mehreren zweiten Sicherheitsanforderungen des ersten Technikteams (A1) eine Voraussetzung für die Lieferung der unredigierten Fassung, aber nicht der redigierten Fassung, des spezifischen Modellelements (66) ist, wobei die ersten Sicherheitsanforderungen oder die zweiten Sicherheitsanforderungen optional mindestens eines von Folgendem einschließen:
eine Anforderung, dass eine IP-Adresse einer Computervorrichtung, von der die Anfrage empfangen wird, keine schwarzgelistete IP-Adresse ist;
eine Anforderung, dass sich die Computervorrichtung nicht in einem unautorisierten geografischen Gebiet befindet;
eine Anforderung, dass ein statischer Vorrichtungsidentifikator der Computervorrichtung nicht schwarzgelistet ist;
eine Anforderung, dass der Benutzer nicht Teil einer Benutzergruppe ist, der das erste Technikteam (A1) das Zugreifen auf unredigierte Modellelemente (66) des ersten Technikteams (A1) untersagt hat;
eine Anforderung, dass das Redigierungstoken nicht mehr als eine vordefinierte Anzahl zulässiger Male verwendet wurde; und
eine Anforderung, dass das spezifische Modellelement (66) nicht zur Einbeziehung in eine Patentanmeldung, die noch nicht angemeldet wurde, gekennzeichnet ist.

15. System nach Anspruch 14, wobei:
jedes der Technikteams einen jeweiligen Sicherheitsclient aufweist;
die Verarbeitungsschaltung dazu konfiguriert ist, zu bestimmen, ob die Anfrage mit der einen oder den mehreren ersten Sicherheitsanforderungen unabhängig von dem Sicherheitsclient des ersten Technikteams (A1) übereinstimmt; und
um die Lieferung der unredigierten Fassung des spezifischen Modellelements (66) zu erleichtern, die Verarbeitungsschaltung dazu konfiguriert ist, zur Bestimmung durch den Sicherheitsclient des ersten Technikteams (A1), ob die Anfrage die eine oder die mehreren zweiten Sicherheitsanforderungen erfüllt, eine Anzeige der Anfrage an den Sicherheitsclient des ersten Technikteams (A1) zu senden, wobei der Sicherheitsclient optional für jedes Technikteam dazu konfiguriert ist, durch Folgendes als ein Vermittler zu agieren:
Kommunizieren mit dem Server, um Anfragen für Modellelemente (66) zu senden und zu empfangen;
Kommunizieren mit dem Server, um Modellelemente (66) zu senden und zu empfangen; und
Speichern von Drittanbietertokens zum Zugreifen auf redigierte Fassungen von Modellelementen (66) anderer Technikteams.

## Revendications

1. Procédé de partage d'un modèle numérique, comprenant :
le stockage en mémoire d'au moins les métadonnées d'un modèle numérique (60) d'un système, dans lequel le modèle numérique (60) comporte une pluralité de sous-systèmes distincts (62) représentant différentes fonctions du système, chaque sous-système (62) comportant une pluralité d'éléments de modèle distincts (66), et la responsabilité de conception pour différents éléments parmi les éléments de modèle (66) est attribuée à différentes équipes parmi une pluralité d'équipes d'ingénierie ;
la réception, en provenance d'un utilisateur qui ne fait pas partie d'une première équipe d'ingénierie (A1) parmi la pluralité d'équipes d'ingénierie, d'une demande d'accès à un élément de modèle particulier (66) d'un sous-système particulier (62), dans lequel la responsabilité de conception pour l'élément de modèle particulier (66) est attribuée à la première équipe d'ingénierie (A1), et l'élément de modèle particulier (66) comporte au moins une expurgation mise en œuvre conformément à une politique de sécurité de la première équipe d'ingénierie (A1) ;
la réalisation d'au moins une étape parmi :
sur la base de la demande ne comportant pas de jeton d'expurgation correspondant à l'au moins une expurgation, la facilitation de la fourniture à l'utilisateur d'une version expurgée de l'élément de modèle particulier (66) qui comporte l'au moins une expurgation ; et
sur la base de la demande comportant le jeton d'expurgation, la facilitation de la fourniture à l'utilisateur d'une version non expurgée de l'élément de modèle particulier (66) ; et
l'utilisation d'un algorithme de validation de jeton pour déterminer si le jeton d'expurgation est valide ou non,
dans lequel
ladite facilitation de la fourniture de la version non expurgée de l'élément de modèle particulier (66) n'est effectuée que si l'algorithme de validation de jeton indique que le jeton d'expurgation est valide, dans lequel ladite utilisation de l'algorithme de validation de jeton comprend :
la comparaison du jeton d'expurgation reçu, ou d'une valeur dérivée du jeton d'expurgation reçu, avec un jeton d'expurgation principal correspondant à l'au moins une expurgation, ou une valeur dérivée du jeton d'expurgation principal ; et
la détermination si le jeton d'expurgation reçu est validé sur la base de la comparaison.

2. Procédé selon la revendication 1, comprenant :
la réception, en provenance d'un utilisateur administratif associé à la première équipe d'ingénierie (A1), d'une indication d'une pluralité d'expurgations numériques distinctes qui correspondent à différents éléments de modèle (66) du sous-système particulier (62) ; et
l'association de différents jetons d'expurgation à chacune des expurgations distinctes.

3. Procédé selon la revendication 1 ou 2, comprenant :
la réception d'une demande en provenance de l'utilisateur pour accéder à un élément de modèle supplémentaire (66) du sous-système particulier (62) qui n'a pas été expurgé ; et
la facilitation de la fourniture de l'élément de modèle supplémentaire (66) sans exiger la réception d'un jeton d'expurgation.

4. Procédé selon une quelconque revendication précédente, dans lequel :
chaque équipe d'ingénierie doit satisfaire à une ou plusieurs exigences de sécurité pour accéder à ses éléments de modèle (66) ; et
lesdites étapes de facilitation sont en outre basées sur la demande en provenance de l'utilisateur qui satisfait à une ou plusieurs exigences de sécurité de la première équipe d'ingénierie (A1).

5. Procédé selon la revendication 4, dans lequel :
les une ou plusieurs exigences de sécurité de la première équipe d'ingénierie (A1) comportent une ou plusieurs premières exigences de sécurité et une ou plusieurs secondes exigences de sécurité qui diffèrent des une ou plusieurs premières exigences de sécurité ;
la conformité de la demande avec les une ou plusieurs premières exigences de sécurité de la première équipe d'ingénierie (A1) est une condition préalable à la fourniture de la version expurgée et de la version non expurgée de l'élément de modèle particulier (66) ; et
la conformité de la demande avec les une ou plusieurs secondes exigences de sécurité de la première équipe d'ingénierie (A1) est une condition préalable à la fourniture de la version non expurgée, mais pas de la version expurgée, de l'élément de modèle particulier (66).

6. Procédé selon la revendication 5, comportant :
un serveur de sécurité (22) effectuant ladite étape de stockage, l'étape de réception et au moins l'une des étapes de facilitation de fourniture ;
le procédé comportant la validation, par le serveur de sécurité (22), du jeton d'expurgation et, sur la base d'une validation réussie, l'envoi d'une indication de la demande à un client de sécurité de la première équipe d'ingénierie (A1) pour faciliter la détermination, par le client de sécurité, si la demande satisfait aux une ou plusieurs secondes exigences de sécurité.

7. Procédé selon l'une quelconque des revendications 4 à 6, dans lequel les une ou plusieurs exigences de sécurité comportent au moins l'une des suivantes :
l'exigence qu'une adresse IP d'un dispositif informatique en provenance duquel est reçue la demande ne soit pas une adresse IP figurant sur une liste noire ;
une exigence selon laquelle le dispositif informatique n'est pas situé sur un territoire géographique non autorisé ; et
une exigence selon laquelle un identifiant de dispositif statique du dispositif informatique ne figure pas sur une liste noire.

8. Procédé selon l'une quelconque des revendications 4 à 7, dans lequel les une ou plusieurs exigences de sécurité comportent au moins l'une des suivantes :
une exigence selon laquelle l'utilisateur ne fait pas partie d'un groupe d'utilisateurs auquel la première équipe d'ingénierie (A1) a interdit l'accès aux éléments de modèle non expurgés (66) de la première équipe d'ingénierie (A1) ; et
une exigence selon laquelle le jeton d'expurgation n'a pas été utilisé plus d'un nombre prédéfini de fois autorisées.

9. Procédé selon une quelconque revendication précédente, comprenant :
le rejet d'une demande de version non expurgée de l'élément de modèle particulier (66) sur la base du fait que l'élément de modèle particulier (66) est signalé pour une inclusion dans une demande de brevet qui n'a pas encore été déposée.

10. Procédé selon une quelconque revendication précédente, dans lequel :
un serveur de sécurité (22) effectue ladite étape de stockage, l'étape de réception et au moins l'une des étapes de facilitation de fourniture ;
ladite facilitation de fourniture de la version expurgée de l'élément de modèle particulier (66) comprend l'obtention par le serveur de sécurité (22) de la version expurgée de son propre stockage et l'envoi de la versoin expurgée à l'utilisateur ; et
ladite facilitation de la fourniture de la version non expurgée de l'élément de modèle particulier (66) à l'utilisateur comprend l'obtention par le serveur de sécurité (22) de la version non expurgée en provenance de la première équipe d'ingénierie (A1) en réponse à la demande, et l'envoi de la version non expurgée à l'utilisateur après l'avoir reçue de la première équipe d'ingénierie (A1).

11. Système pour le partage d'un modèle numérique, comprenant :
un serveur de sécurité (22) comprenant un ensemble de circuits de traitement connectés fonctionnellement à la mémoire et configurés pour :
stocker en mémoire au moins les métadonnées d'un modèle numérique (60) d'un système, dans lequel le modèle numérique (60) comporte une pluralité de sous-systèmes distincts (62) représentant différentes fonctions du système, chaque sous-système (62) comportant une pluralité d'éléments de modèle distincts (66), et la responsabilité de conception pour différents éléments parmi les éléments de modèle (66) est attribuée à différentes équipes parmi une pluralité d'équipes d'ingénierie ;
recevoir, en provenance d'un utilisateur qui ne fait pas partie d'une première équipe d'ingénierie (A1) parmi la pluralité d'équipes d'ingénierie, une demande d'accès à un élément de modèle particulier (66) d'un sous-système particulier (62) géré par la première des équipes d'ingénierie, dans lequel l'élément de modèle particulier (66) comporte au moins une expurgation numérique mise en œuvre conformément à une politique de sécurité de la première des équipes d'ingénierie ;
réaliser au moins une étape parmi :
sur la base de la demande ne comportant pas de jeton d'expurgation correspondant à l'au moins une expurgation, la facilitation de la fourniture à l'utilisateur d'une version expurgée de l'élément de modèle particulier (66) qui comporte l'au moins une expurgation ; et
sur la base de la demande comportant le jeton d'expurgation, la facilitation de la fourniture à l'utilisateur d'une version non expurgée de l'élément de modèle particulier (66) ; et
utiliser un algorithme de validation de jeton pour déterminer si le jeton d'expurgation est valide ou non et ne faciliter la fourniture de la version non expurgée de l'élément de modèle particulier (66) que si l'algorithme de validation de jeton indique que le jeton d'expurgation est valide.

12. Système selon la revendication 11, dans lequel l'ensemble de circuits de traitement est configuré pour :
recevoir, en provenance d'un utilisateur administratif associé à la première équipe d'ingénierie (A1), une indication d'une pluralité d'expurgations distinctes qui correspondent à différents éléments de modèle (66) du sous-système particulier (62) ; et
associer différents jetons d'expurgation à chacune des expurgations distinctes.

13. Système selon la revendication 11 ou 12, dans lequel l'ensemble de circuits de traitement est configuré pour :
recevoir une demande en provenance de l'utilisateur pour accéder à un élément de modèle supplémentaire (66) du sous-système particulier (62) qui n'a pas été expurgé ; et
faciliter la fourniture de l'élément de modèle supplémentaire (66) sans exiger la réception d'un jeton d'expurgation.

14. Système selon l'une quelconque des revendications 11 à 13, dans lequel :
la première équipe d'ingénierie (A1) a une ou plusieurs premières exigences de sécurité et une ou plusieurs secondes exigences de sécurité qui diffèrent des une ou plusieurs premières exigences de sécurité ;
la conformité de la demande avec les une ou plusieurs premières exigences de sécurité de la première équipe d'ingénierie (A1) est une condition préalable à la facilitation par le serveur de sécurité (22) de la fourniture de la version expurgée et de la version non expurgée de l'élément de modèle particulier (66) ; et
la conformité de la demande avec les une ou plusieurs secondes exigences de sécurité de la première équipe d'ingénierie (A1) est une condition préalable à la fourniture de la version non expurgée, mais pas de la version expurgée, de l'élément de modèle particulier (66), dans lequel éventuellement les premières exigences de sécurité ou les secondes exigences de sécurité comportent au moins l'une des suivantes :
l'exigence qu'une adresse IP d'un dispositif informatique en provenance duquel est reçue la demande ne soit pas une adresse IP figurant sur une liste noire ;
une exigence selon laquelle le dispositif informatique n'est pas situé sur un territoire géographique non autorisé ;
une exigence selon laquelle un identifiant de dispositif statique du dispositif informatique ne figure pas sur une liste noire ;
une exigence selon laquelle l'utilisateur ne fait pas partie d'un groupe d'utilisateurs auquel la première équipe d'ingénierie (A1) a interdit l'accès aux éléments de modèle non expurgés (66) de la première équipe d'ingénierie (A1) ;
une exigence selon laquelle le jeton d'expurgation n'a pas été utilisé plus d'un nombre prédéfini de fois autorisées ; et
une exigence selon laquelle l'élément de modèle particulier (66) n'a pas été signalé pour une inclusion dans une demande de brevet qui n'a pas encore été déposée.

15. Système selon la revendication 14, dans lequel :
chacune des équipes d'ingénierie a un client de sécurité respectif ;
l'ensemble de circuits de traitement est configuré pour déterminer si la demande est conforme avec les une ou plusieurs premières exigences de sécurité, indépendamment du client de sécurité de la première équipe d'ingénierie (A1) ; et
pour faciliter la fourniture de la version non expurgée de l'élément de modèle particulier (66), l'ensemble de circuits de traitement est configuré pour envoyer une indication de la demande au client de sécurité de la première équipe d'ingénierie (A1) afin que le client de sécurité de la première équipe d'ingénierie (A1) puisse déterminer si la demande satisfait aux une ou plusieurs exigences de sécurité secondaires, dans lequel éventuellement, pour chaque équipe d'ingénierie, le client de sécurité est configuré pour agir comme intermédiaire en :
communiquant avec le serveur pour envoyer et recevoir des demandes pour les éléments de modèle (66) ;
communiquant avec le serveur pour envoyer et recevoir des éléments de modèle (66) ; et
stockant des jetons de tierce partie pour accéder aux versions expurgées des éléments de modèle (66) d'autres équipes parmi les équipes d'ingénierie.
